# FASCICULE DE BREVET EUROPEEN

(11) **EP 1 788 881 B1**
(45) Date de publication et mention de la délivrance du brevet: **16.01.2013**
(21) Numéro de dépôt: 05774048.2
(22) Date de dépôt: 05.07.2005
(51) Int. Cl.: A21D 8/06, A21D 15/02, A21D 2/18, A21D 8/04, A21D 6/00

(54) **PROCEDES ET PRODUITS DE PANIFICATION**
BROTHERSTELLUNGSVERFAHREN UND PRODUKTE
BREADMAKING METHODS AND PRODUCTS

(30) Priorité: 05.07.2004 EP 04015795
(43) Date de publication de la demande: 30.05.2007
(73) Titulaire: Lesaffre et Compagnie, 75001 Paris (FR)
(72) Inventeur: DESBUQUOIS, Philippe, 59126 Linselles (FR); GROUET, Norbert, 59700 Marcq-en-Baroeul (FR); MAITRE, Hubert, 59700 Marcq-en-Baroeul (FR); MUCHEMBLED, Jean-Jacques, 59700 Marcq-en-Baroeul (FR)
(74) Mandataire: Cabinet Plasseraud
(86) Numéro de dépôt international: PCT/EP2005/007258
(87) Numéro de publication internationale: WO 2006/002985

(56) Documents cités:
- EP-A- 1 120 043
- AT-B- 400 279
- FR-A- 2 589 044
- US-A- 4 788 067
- US-A- 4 861 601
- US-A1- 2003 072 862
- INTERNET CITATION Extrait de l'Internet: <URL:www.quid.fr/2007/alimentation/additifs _alimentaires/1> [extrait le 2007-11-27]

## Description

La présente invention concerne un procédé amélioré pour la préparation de produits cuits de panification à partir de pâtes précuites surgelées, les pâtes précuites surgelées ainsi obtenues et les produits cuits et améliorants de panification correspondants.

La panification concerne, dans le présent contexte, l'ensemble des étapes permettant de fabriquer un produit cuit de boulangerie, comme des pains, par la cuisson au four après fermentation d'une pâte ou pâton contenant par définition au moins les ingrédients suivants : de la farine de céréales, de l'eau et de la levure active de boulangerie. Le terme « farine de céréales » se réfère à une farine issue d'une céréale ou encore d'une combinaison de plusieurs céréales.

La préparation d'une pâte de boulangerie prête à être cuite au four est un processus comprenant plusieurs étapes, y compris au moins une étape de pétrissage et au moins une étape de fermentation.

Généralement, le boulanger travaille en continu, ce qui peut avoir une incidence sur l'état de fraîcheur du pain. Cuit le matin, le pain reste frais jusqu'en début d'après-midi, puis sa qualité se dégrade avec un dessèchement ou un ramollissement de la croûte et une perte de croustillant et de saveur. Aujourd'hui, le consommateur moderne vient chercher son pain qu'il souhaite frais, à toute heure de la journée y compris le soir à la sortie de son travail.

Pour pouvoir répondre à cette demande du consommateur, le boulanger devait effectuer plusieurs cuissons par jour espacées dans le temps. Or, la préparation d'une pâte prête à être cuite est un travail long et intensif en main-d'oeuvre et, à température ambiante, la pâte peut être conservée seulement un temps très court avant sa mise au four.

Plusieurs procédés ont été développés pour pallier ce problème.

On connaît ainsi la technologie de la « pâte précuite ». Cette technologie se caractérise par une étape de précuisson de la pâte fermentée qui coagule la pâte à coeur et forme un film souple à la périphérie, précurseur, de la croûte. Une caractéristique de la pâte précuite traditionnelle est l'absence de brunissement dudit film souple : un léger brunissement indique l'ébauche de la croûte et donc que le stade de la précuisson est déjà dépassé. Ceci se traduira par des défauts ultérieurs : pertes de rendement de la production et écaillage de la croûte après la cuisson finale. L'étape de précuisson est donc particulièrement délicate. La technologie de la « pâte précuite » traditionnelle exclut dans la plupart des cas les pièces de grosses dimensions, en raison de la difficulté de coaguler à coeur sans pour autant esquisser la croûte. Il s'agit donc le plus souvent de petits pains, demi-baguettes, ou baguettes courtes. La pâte précuite peut être soit conservée de 24 à 48 heures dans des conditions évitant le dessèchement (précuit frais), soit surgelée. Il est également important de veiller à limiter le dessèchement des pâtes précuites avant, pendant et après la surgélation. Lors de la cuisson finale, typiquement au niveau du point de vente, les pâtes précuites surgelées passent directement du congélateur au four. Du pain frais est donc disponible à tout moment de la journée après 10 à 20 minutes de cuisson finale, selon la forme et le poids des pâtons précuits. Un défaut gênant important de la technologie de la pâte précuite congelée actuelle est la rétraction des pâtes précuites lors de la cuisson finale, qui réduit leur volume d'au moins 10%.

Les documents US-A-4788067 et US-A-4861601 décrivent des procédés appartenant à cette technologie des pâtes précuites nécessitant une étape de cuisson finale de la pâte précuite de 10 à 15 minutes.

Il a également été essayé de surgeler le pain ou produit analogue totalement cuit, puis le dégeler juste avant la vente par un bref passage au four. Cette méthode présente deux défauts importants : d'une part, la mie se déshydrate et laisse apparaître des auréoles ou couronnes blanches et, d'autre part, la croûte s'écaille. Cette méthode du pain totalement cuit surgelé ne permet donc pas d'obtenir des produits de boulangerie de bonne qualité.

EP 1 120 043 a pour objet un procédé de préparation de pâtes feuilletées fermentées, cuites surgelées. La pâte feuilletée est cuite complètement avant congélation.

AT 400 279B concerne un procédé en deux étapes avec préparation d'un produit précuit congelé et ensuite cuisson finale du produit cuit, dans lequel la caractéristique principale est une réduction du temps de précuisson et une augmentation de la température de précuisson par rapport aux temps et température conventionnels. Le procédé décrit dans ce document ne mentionne pas la présence de sucres intervenant dans les réactions de type Maillard, en quantité excédant celle qui est fermentée par la levure avant la précuisson et suffisante pour donner de la couleur à la croûte lors de la précuisson et/ou de protéines intervenant dans les réactions de type Maillard.

La présente invention concerne un procédé de panification amélioré permettant de fournir pendant toute la journée et en peu de temps des produits cuits de bonne qualité sortant du four. En particulier, la présente invention permet de fournir de tels produits cuits par une cuisson finale au four de 5 minutes ou moins.

Le procédé selon l'invention permet également de diminuer fortement la rétraction des pâtes lors de la cuisson finale. Le procédé selon l'invention permet également d'éviter un écaillage gênant de la croûte.

Dans le cadre de la présente invention, le terme « four » se réfère à des fours où la cuisson de la pâte est effectuée par transfert de chaleur. Ce terme « four » ne couvre donc pas les fours à micro-ondes. Le four est de préférence un four de boulangerie, notamment de type rotatif ventilé ou statique ventilé, ou à sole fixe, ou encore sous forme de tunnel horizontal ou modulaire vertical, mais peut être également tout four ménager permettant d'atteindre les températures indiquées dans l'enceinte du four. Les fours de boulangerie permettent la cuisson de pièces de panification à des températures entre 150°C et 260°C, éventuellement avec injection de vapeur dans le four.

Le terme « produit cuit » se réfère à un produit totalement cuit, prêt à être consommé. Dans le cas du procédé traditionnel du précuit congelé et dans le cas de l'invention, le produit cuit est donc le produit après cuisson finale et se distingue par conséquent du pâton précuit qui n'a subi qu'une précuisson.

La présente invention concerne un procédé de fabrication d'un produit cuit de panification. Dans ce procédé, un pâton formé fermenté et prêt à cuire correspondant au dit produit cuit est soumis à une précuisson dans un four jusqu'à ce que sa mie soit coagulée et qu'une croûte soit formée et colorée. Le pâton précuit ainsi obtenu est surgelé pour sa conservation. Le produit totalement cuit est obtenu par une cuisson finale au four du pâton précuit pendant une durée inférieure ou égale à 5 minutes, de préférence pendant une durée inférieure ou égale à 3 minutes, et encore de préférence entre 2 à 3 minutes à une température au four entre 200°C et 260°C. Avantageusement, la cuisson finale est effectuée à une température au four de 220°C à 260°C, de manière plus avantageuse de 230°C à 250°C.

Il est de manière générale souhaitable que le temps de la cuisson finale ne soit pas inférieur à 2 minutes.

Suivant une forme de réalisation, la précuisson est effectuée à une température au four de 220°C à 260°C, de préférence de 230°C à 250°C.

Dans le présent contexte, les termes « coloré » et « coloration » concernent le brunissement de la croûte lors de la cuisson au four, ce brunissement distinguant notamment la croûte de la mie.

De manière utile, la surgélation du pâton précuit est réalisée de manière à atteindre rapidement une température à coeur de -12°C ou une température inférieure. La surgélation peut par exemple être effectuée à une température d'enceinte d'environ -30°C.

Après surgélation et avant la cuisson finale, le pâton précuit surgelé est de préférence conservé à une température de -15°C à -25°C, encore de préférence de -18°C à -22°C, et encore plus de préférence à -18°C.

Le pâton précuit surgelé peut ainsi être conservé pendant plusieurs semaines, voire jusqu'à 6 mois, voire jusqu'à un ou deux ans.

Lors de la cuisson finale, le pâton précuit surgelé peut être directement introduit dans le four, c'est-à-dire à l'état surgelé. Il est également possible de soumettre le pâton précuit surgelé à une étape de décongélation partielle ou totale avant son introduction dans le four pour la cuisson finale.

Le procédé selon l'invention permet notamment d'obtenir un produit cuit dont la croûte ne s'écaille pas et qui a un volume égal à au moins 95% du volume obtenu si le pâton formé, fermenté et prêt à cuire avait été totalement cuit directement en une seule étape de cuisson et sans étape de surgélation.

Comme indiqué ci-dessus, le pâton est par définition préparé avec au moins de la farine de céréales, de l'eau (éventuellement ajoutée sous forme de lait ou d'autre produit contenant de l'eau) et de la levure active de boulangerie.

D'autres ingrédients jouant un rôle d'améliorant sont également ajoutés lors de la préparation du pâton.

Ainsi, les ingrédients du pâton peuvent avantageusement comprendre, en plus de la farine de céréales, de l'eau et de la levure, un ou des stabilisants alimentaires .

Les stabilisants alimentaires sont notamment des dérivés de cellulose tels que le carboxyméthylcellulose, des pectines, des alginates et carraghénanes, de la gomme de guar, de la gomme de caroube, de la gomme de xanthane, de la gélatine, de l'amidon modifié, de l'amidon prégélatinisé et de la farine prégélatinisée. Ils sont de préférence choisi(s) parmi les stabilisants alimentaires correspondants à des dérivés de cellulose, des amidons chimiquement ou physiquement modifiés, des gommes et des farines prégélatinisées, et en particulier un ou plusieurs stabilisants alimentaires choisi(s) parmi le carboxyméthylcellulose, la gomme de xanthane, la farine prégélatinisée de blé (= froment), la farine prégélatinisée de maïs.

De préférence, les ingrédients du pâton comprennent de l'amidon prégélatinisé ou une source d'amidon prégélatinisé telle qu'une farine de céréales prégélatinisée, comme notamment de la farine de blé prégélatinisée.

Les ingrédients du pâton comprennent également :
- un ou des sucres intervenant dans les réactions de type Maillard et ceci en une quantité qui d'une part excède la quantité du dit ou des dits sucres qui est fermentée par la levure avant l'étape de précuisson (dans le cas d'un sucre fermentescible par la levure présente dans le pâton, cette condition étant a priori remplie quand le sucre présent n'est pas fermentescible), et qui d'autre part est suffisante pour donner de la couleur à la croûte lors de l'étape de précuisson, et/ou
- des protéines intervenant dans les mécanismes de type Maillard.

Les réactions de type Maillard sont toutes les réactions où sous l'action de la chaleur les sucres ayant une fonction réductrice donneront avec les composés azotés des composés colorés. Les sucres les plus réactifs sont les sucres à 5 ou 6 atomes de carbone, mais les sucres à 12 atomes de carbone, comme le saccharose, le lactose et le maltose, participent aussi à ces réactions.

Parmi les ingrédients comprenant un ou des sucres intervenant dans les mécanismes de type Maillard et susceptibles d'être utilisés dans le contexte de la présente invention, on peut notamment mentionner : les dérivés de lait tels que le lactosérum, le perméat de lait et la poudre de lait, le glucose, le saccharose et le sorbitol.

Parmi les ingrédients comprenant une ou des protéines intervenant dans les mécanismes de type Maillard et susceptibles d'être utilisés dans le contexte de la présente invention, on peut notamment mentionner : les dérivés de lait tels que le lactosérum, la poudre de lait et les caséinates issus du lait, ainsi que des suppléments de gluten.

Ainsi, les ingrédients du pâton peuvent de manière utile comprendre au moins un ingrédient contenant un sucre et/ou une protéine intervenant dans les réactions de type Maillard, cet ingrédient étant choisi dans la famille du lactosérum, du lactose, du glucose (= dextrose), du galactose, du saccharose, du fructose et du sorbitol.

Suivant une forme de réalisation le sucre en excès intervenant dans les réactions de type Maillard, comme le glucose ou le xylose, est au moins partiellement, voire dans sa totalité, apporté lors de la fermentation du pâton par au moins une préparation enzymatique.

Parmi les préparations enzymatiques capables d'apporter un sucre intervenant dans les mécanismes de type Maillard et susceptibles d'être utilisées dans le contexte de l'invention, on peut mentionner les amylases, les amyloglucosidases, la farine de blé malté et les hémicellulases bactériennes. Ainsi, les ingrédients du pâton peuvent en particulier comprendre une telle préparation enzymatique contenant au moins une amyloglucosidase (= glucoamylase = glucan-1,4-alpha-glucosidase).

Les ingrédients du pâton peuvent également comprendre au moins une enzyme choisie dans la famille des hémicellulases libérant des sucres à 5 atomes de carbone (ci-après C5), comme le xylose, et des exoamylases, de préférence maltogènes, c'est-à-dire des amylases dont le produit final est essentiellement le maltose, cette enzyme ou ces enzymes étant de préférence en combinaison avec et/ou faisant partie de la préparation enzymatique contenant au moins une amyloglucosidase.

Suivant une forme de réalisation mise en oeuvre, des protéines intervenant dans les mécanismes de type Maillard sont au moins partiellement apportées lors de la fermentation du pâton par au moins une préparation enzymatique, telle qu'une préparation contenant une protéase.

Le pâton est avantageusement préparé avec des ingrédients comprenant à la fois :
- un stabilisant alimentaire ; et
- un ingrédient contenant un sucre ou des protéines intervenant dans les réactions de type Maillard, de préférence du lactosérum et/ou du glucose.

De manière également avantageuse, le pâton est préparé avec des ingrédients comprenant à la fois :
- un stabilisant alimentaire ; et
- une source d'enzymes apportant lors de la fermentation de la pâte des sucres intervenants dans les réactions de type Maillard ;
le stabilisant alimentaire étant de préférence une farine de céréales panifiables prégélatinisée, encore de préférence une farine de blé prégélatinisée ; la source d'enzymes étant de préférence une source d'amyloglucosidase, et encore de préférence d'amyloglucosidase et d'hémicellulase donnant des sucres en C5, et encore plus de préférence d'amyloglucosidase, d'hémicellulase donnant des sucres en C5 et d'exoamylase.

Le pâton comprend de manière utile au moins l'un des trois adjuvants de panification suivants :
1) un oxydant ;
2) un émulsifiant ;
3) une préparation enzymatique choisie dans le groupe des alpha-amylases non maltogènes, des endo-alpha-amylases, des hémicellulases celles-ci étant de préférence des endo-xylanases, des lipases, des phospholipases, ou une combinaison de ces préparations enzymatiques ;

l'oxydant préféré étant l'acide ascorbique ; les émulsifiants préférés étant les émulsifiants E472e et E472f (esters diacetyl-tartriques de mono- et diglycérides d'acides gras). Le pâton comprend de préférence au moins deux desdits trois adjuvants de panification, et encore de préférence, ces trois adjuvants de panification.

Les ingrédients du pâton peuvent aussi comprendre comme source d'exoamylase, en l'occurrence de beta-amylase, des céréales maltées, de préférence du blé malté ou de l'orge malté, encore de préférence du blé malté. Les termes farines de céréales maltées ou malt de céréales, ou encore extrait enzymatique de malt sont considérés comme des équivalents couverts par le terme « céréales maltées ». Cette règle s'applique aussi quand la céréale est précisée par son nom (blé, orge).

Le pâton avant précuisson présente de manière utile une hydratation d'au moins 62% en pourcentage du boulanger, ce qui correspond à une hydratation supérieure d'au moins deux points ou 2% en pourcentage du boulanger à l'hydratation classique d'un pâton réalisé dans un schéma classique avec une seule cuisson des pains avec la même farine panifiable (si on raisonne par rapport à l'hydratation ou teneur en eau de la pâte, l'augmentation est d'au moins 2/60 = 3,3%).

L'invention concerne également un procédé pour la fabrication d'un pâton précuit surgelé apte à donner un produit cuit de panification par une cuisson finale correspondant à un passage au four dudit pâton précuit surgelé pendant une durée inférieure ou égale à 5 minutes à une température du four entre 200°C et 260°C, de préférence égale ou inférieure à 3 minutes entre 200°C et 260°C, étant rappelé que la cuisson finale est avantageusement effectuée à une température du four de 220°C à 260°Ç, de préférence de 230°C à 250°C. Ce procédé comprend les étapes suivantes :
- obtention d'un pâton formé, fermenté et prêt à cuire correspondant au produit cuit ;
- précuisson au four dudit pâton jusqu'à ce que :
   - sa mie soit coagulée et
   - une croûte soit formée et colorée ;
- surgélation du pâton précuit ainsi obtenu,
le pâton étant un pâton selon l'une quelconque des formes de réalisation décrites ci-dessus dans le cadre de l'invention et la précuisson étant effectuée à une température au four de 230°C à 250°C

L'invention concerne aussi le pâton précuit surgelé correspondant.

Comme indiqué ci-dessus, le pâton précuit surgelé permet d'obtenir un produit cuit par une simple cuisson finale pendant 5 minutes ou moins à une température du four entre 200°C et 260°C.

Il a toutefois été constaté que, dans certaines applications particulières, le pâton précuit est acceptable pour le consommateur même au stade partiellement cuit, c'est-à-dire sans cuisson finale. Il apparaît en effet qu'après décongélation, le pâton précuit peut être utilisé, sans cuisson finale, dans la préparation de sandwiches garnis de qualité acceptable. Les pâtons précuits sous forme de petits pains, de demi-baguettes ou de baguettes courtes sont en particulier appropriés pour une telle utilisation. Il est rappelé que la pâton précuit surgelé se distingue d'un pâton totalement cuit surgelé en ce que le pâton précuit surgelé donne après une cuisson finale correspondant à un passage au four pendant 2 à 3 minutes à une température entre 200°C et 260°C un produit cuit frais sans écaillage gênant.

Des améliorants de panification pour la mise en oeuvre des procédés de fabrication suivant l'invention (procédés de fabrication d'un produit cuit et procédés de fabrication d'un pâton précuit surgelé), ainsi que l'utilisation desdits améliorants dans lesdits procédés de panification sont décrits.

Notamment, un améliorant de panification conçu pour les procédés de fabrication suivant l'invention contient en combinaison :
- un stabilisant choisi dans le groupe des dérivés de la cellulose, des amidons prégélatinisés et des farines de céréales prégélatinisées ;
- du lactosérum ;
- et du dextrose.

Un autre améliorant contient en combinaison une farine de céréales panifiable prégélatinisée, de préférence une farine de blé prégélatinisée, et une arnyloglucosidase, de préférence en combinaison également avec une hémicellulase donnant des sucres en C5 et/ou une exo-amylase maltogène. De manière plus préférée, ledit améliorant est apte à apporter, en plus de ladite ou desdites préparation(s) enzymatique(s), par rapport à 100 kg de farine mise en oeuvre, en pourcentage du boulanger : 1% à 4% de farine de céréales panifiables prégélatinisée, de préférence de la farine de blé prégélatinisée, et seulement des additifs autorisés dans le pain courant français selon la directive européenne 95/2 CE, et en particulier 0,009% à 0,020% d'acide ascorbique, de préférence 0,009% à 0,015% d'acide ascorbique.

En particulier, un améliorant de panification utile dans les procédés selon l'invention est apte à apporter par rapport à 100 kg de farine mise en oeuvre, en pourcentage du boulanger :
- 1% à 3% de dextrose (= glucose),
- 0,5% à 4% de lactosérum, et
- 0,3% à 1% de carboxyméthylcellulose et/ou 1 à 4% de farine de céréales panifiables prégélatinisée. L'améliorant peut aussi comprendre des céréales maltées.
De préférence, l'améliorant comprend du blé malté ou de l'orge malté et encore de préférence du blé malté. De manière particulièrement utile, l'améliorant apporte aussi, par rapport à 100 kg de farine mise en oeuvre, en pourcentage du boulanger : 0,1% à 1% de céréales maltées (telles que définies ci-dessus), de préférence du blé malté ou de l'orge malté, et plus de préférence du blé malté.

Un autre aspect de l'invention est l'obtention d'un produit cuit de panification par un procédé comprenant la cuisson finale d'un tel pâton précuit surgelé par un passage au four dudit pâton précuit surgelé pendant une durée inférieure ou égale à 5 minutes entre 200°C et 260°C, de préférence égale ou inférieure à 3 minutes entre 200°C et 260°C, et encore de préférence de 2 à 3 minutes entre 200°C et 260°C, cette cuisson finale étant de préférence effectuée à une température au four de 220°C à 260°C, encore de préférence de 230°C à 250°C.

Comme déjà indiqué ci-dessus, lors de cette cuisson finale, le pâton précuit surgelé peut être directement introduit au four ou peut être soumis à une étape de décongélation partielle ou totale avant son introduction dans le four pour la cuisson finale. L'invention comporte également entre autre le pâton précuit surgelé et seulement décongelé.

L'invention représente un intérêt pour les pains à croûte, tels que notamment les (demi-) baguettes et les petits pains.
La présente invention est également utile pour des produits cuits choisis parmi tous types de pains, y compris les pains spéciaux, y compris les pains viennois et pains au lait. Le poids du produit cuit peut notamment être de 30 g à 2 kg. L'invention est particulièrement intéressante pour les pâtons de 200 g à 2 kg. Elle ne concerne pas les pâtes à pizza, les viennoiseries comme les croissants et les brioches.

Grâce à la présente invention, un produit cuit et frais de qualité peut maintenant être fourni en 5 minutes ou moins, voire en 3 minutes ou moins.

Ceci est particulièrement intéressant pour les ventes dans des points chauds, mais l'invention permet également au boulanger de dépanner des clients ayant d'urgence besoin d'un produit de panification frais après épuisement de la production en direct de la journée réalisée par le boulanger. Finalement, l'invention a également un intérêt pour des consommateurs qui souhaitent obtenir des produits cuits de qualité en réalisant eux-mêmes la cuisson finale.

Les avantages de la présente invention sont illustrés plus clairement dans les exemples ci-après.

### EXEMPLES

### Exemples 1 et 2 d'un pain minute suivant l'invention et exemple comparatif C pain à base de pâte précuite surgelée

### 1) Préparation de la pâte prête à être cuite

Le schéma de fabrication de la pâte prête à être cuite, utilisé pour les exemples 1 et 2 selon l'invention et pour l'exemple comparatif C, schéma proche d'un schéma industriel, est donné dans le tableau 1.

**Tableau 1**

| | |
|---|---|
| Frasage : | 2 minutes en 1^{ère} vitesse sur pétrin à spirale |
| Pétrissage : | 6 minutes en 2^{éme} vitesse sur pétrin à spirale |
| Pointage : | 5 minutes |
| Division : | poids pâton : 350 g |
| Boulage : | mécanique |
| Détente : | 15 minutes |
| Façonnage : | mécanique en baguette |
| Apprêt : | 1h 45 à une température ambiante de 27°C |

### 2) Composition de la pâte

Les formules des pâtes 1 et 2 suivant l'invention et de la pâte selon l'exemple comparatif C, sont exprimées comme d'habitude dans le domaine technique en pourcentage du boulanger; c'est-à-dire en parties en masse de l'ingrédient pour 100 parties en masse de farine de céréales mise en oeuvre. Elles sont données dans le tableau 2.

La levure fraîche de panification ou levure pressée de panification est une levure à environ 30% de matières sèches, vendue sous la marque "L'HIRONDELLE"^{®} bleu par le GIE LESAFFRE à 94701 Maisons Alfort, France.

L'améliorant IBIS^{®} bleu est un améliorant de formulation classique pour pain courant français, commercialisé par le GIE LESAFFRE, à Maisons-Alfort, France, et par LESAFFRE INTERNATIONAL, Division Ingrédients, à 59700 Marcq-en-Baroeul, France. Cet améliorant apporte notamment les doses nécessaires d'acide ascorbique et de préparations enzymatiques pour obtenir des pains de qualité avec le schéma ci-dessus (voir tableau 1).

Les compositions améliorantes « G » et « N » selon l'invention utilisées dans les exemples 1 et 2 sont décrites dans les tableaux 3a et b.

**Tableau 2**

| Baguette de 350g en pâte | Exemple comparatif C | Exemple 1 selon l'invention | Exemple 2 selon l'invention |
|---|---|---|---|
| Farine de froment type 55 | 100,0 | 100,0 | 100,0 |
| Eau | 60 | 63 | 63 |
| Sel | 1,8 | 1,8 | 1,8 |
| Levure fraîche (à environ 30% de matières sèches) "L'HIRONDELLE"^{®} bleu | 2,5 | 2,5 | 2,5 |
| Améliorant de panification IBIS^{®} bleu | 1,0 | / | / |
| Composition améliorante « G » selon l'invention | / | 4,0 | / |
| Composition améliorante « N » selon l'invention | / | / | 6,0 |

**Tableau 3a**

| Composition améliorante « G » suivant l'invention | Composition (parties en poids) | Dose utilisée (pourcentage du boulanger) |
|---|---|---|
| Dextrose | 50,86 | 2,0344 |
| Lactosérum | 25,00 | 1,0000 |
| Carboxyméthylcellulose | 12,50 | 0,5000 |
| Farine de blé maltée | 7,50 | 0,3000 |
| DATEM | 3,75 | 0,1500 |
| Acide ascorbique | 0,30 | 0,0120 |
| Hémicellulases fongiques | 0,04 | 0,0016 |
| Alpha-amylases fongiques | 0,05 | 0,0020 |
| TOTAL | 100,00 | 4,0000 |

**Tableau 3b**

| Composition améliorante « N » suivant l'invention | Composition (parties en poids) | Dose utilisée (pourcentage du boulanger) |
|---|---|---|
| Dextrose | 33,34 | 2,0004 |
| Farine prégélatinisée | 33,34 | 2,0004 |
| Lactosérum | 16,67 | 1,0002 |
| Farine de froment | 8,89 | 0,5334 |
| Farine de blé maltée | 5,00 | 0,3000 |
| DATEM | 2,50 | 0,1500 |
| Acide ascorbique | 0,20 | 0,0120 |
| Hémicellulases fongiques | 0,03 | 0,0018 |
| Alpha-amylases fongiques | 0,03 | 0,0018 |
| TOTAL | 100,00 | 6,0000 |

### 3) Précuisson du pâton

La précuisson des pâtons est réalisée en four rotatif ventilé du type « Angoulevant » avec vapeur, commercialisé par la société Angoulevant/Eurofour à 59144 Gommegnies, France (voir tableau 4).

**Tableau 4**

| | Exemple comparatif C | Exemples 1 et 2 selon l'invention |
|---|---|---|
| Température de préchauffage du four pour la précuisson (°C) | 240 | 240 |
| Température de consigne du four pour la précuisson (°C) | 160 | 240 |
| Temps de précuisson (minutes) | 11 | 14 |

A titre d'information : pour la préparation en direct d'une baguette de 350 g en pâte de même type totalement cuite, on peut utiliser une température de préchauffage de 240°C, une température de consigne de 200°C et une durée de cuisson de 22 minutes.

### 4) Surgélation

Les pâtons précuits selon les exemples 1 et 2 suivant l'invention et le pâton précuit selon l'exemple comparatif C sont surgelés dans une enceinte à -30°C pendant 30 minutes, puis conservés à -20°C.

### 5) Cuisson finale

La cuisson finale des pâtons précuits surgelés est réalisée en four rotatif ventilé du type « Angoulevant » avec vapeur (voir tableau 5).

**Tableau 5**

| | Exemple comparatif C | Exemples 1 et 2 selon l'invention |
|---|---|---|
| Température de préchauffage du four pour la cuisson finale (°C) | 240 | 250 |
| Température de consigne du four pour la cuisson finale (°C) | 240 | 250 |
| Temps de cuisson finale (minutes) | 10 | 2 à 3 |

### 6) Humidité de la périphérie

L'humidité de la périphérie des pâtons précuits avant surgélation et des produits cuits finaux obtenus dans les exemples 1 et 2 selon l'invention et dans l'exemple comparatif C a été mesurée (voir tableau 6).

**Tableau 6**

| | Exemple comparatif C | Exemples 1 et 2 selon l'invention |
|---|---|---|
| Humidité de la périphérie du pâton précuit après 30 minutes de ressuage (% en poids) | 36 | 32 |
| Humidité de la périphérie du produit cuit final après 30 minutes de ressuage (% en poids) | 31 | 31 |

Le ressuage (« cooling » en anglais) correspond au refroidissement pendant lequel il y a une petite évaporation de l'eau.

L'humidité de la périphérie du pâton précuit et du produit cuit correspond à l'humidité de la zone superficielle du pâton précuit ou du produit cuit correspondant à une épaisseur d'environ 1 cm ; cette zone superficielle comprend la croûte ou bien le film souple pratiquement incolore dans le cas du pâton précuit dans l'exemple comparatif C.

### 7) Coloration

La couleur de la surface des pâtons précuits et des produits cuits finaux obtenus dans les exemples 1 et 2 selon l'invention et dans l'exemple comparatif C a été mesurée (voir tableau 7). Ces mesures ont été effectuées au chromamètre MINOLTA. Le chromamètre MINOLTA est configuré dans la représentation L*a*b* qui est l'un des espaces colorimétriques uniformes recommandé pour correspondre plus précisément à la vision humaine des couleurs et à la perception de l'interprétation des différentes couleurs.

Dans cette représentation, « L » indique le facteur de clarté (plus la valeur de « L » est élevée plus l'échantillon tend vers le blanc).
« a » représente l'axe vert-rouge; cette valeur varie entre -60 < « a » <+60. La valeur basse caractérise le vert, la valeur haute caractérise le rouge.
« b » représente l'axe jaune-bleu. L'échelle est identique à celle de « a ». Elle varie de -60 < « b » <+60. La valeur basse caractérise le bleu et la valeur haute caractérise le jaune.

**Tableau 7**

| | | Exemple comparatif C | Exemples 1 et 2 selon l'invention |
|---|---|---|---|
| Dessus de croûte | | | |
| Après précuisson | L | 70,85 | 45,62 |
| | a | -0,43 | 15,92 |
| | b | 18,55 | 27,12 |
| Après cuisson finale | L | 60,25 | 36,87 |
| | a | 9,78 | 15,40 |
| | b | 32,08 | 17,36 |

On observe que, dans le cas des produits suivant l'invention, la croûte est bien plus foncée que dans le cas du procédé de pâte précuite suivant l'exemple comparatif C, que ce soit après la précuisson ou après la cuisson finale. Le produit suivant les exemples 1 et 2 selon l'invention après la précuisson est même légèrement plus foncé que le produit cuit selon l'exemple comparatif C après la cuisson finale.

On observe également que les produits suivant l'invention présentent une intensité de couleur plus rouge et une intensité moindre du jaune.

### 8) Résultats.

Dans le procédé suivant l'invention, la rétraction du pâton lors de la cuisson finale est inférieure à 5% sur le volume du produit cuit. Ceci constitue un avantage important par rapport au procédé traditionnel du précuit congelé dans lequel on observe une rétraction lors de la cuisson finale d'au moins 10%, c'est-à-dire d'au moins le double.

La mie des produits cuits selon l'invention ne présente pas d'auréoles ou couronnes blanches comme dans le cas d'un produit totalement cuit qui a été surgelé et ensuite décongelé.

La couleur de la croûte des produits cuits selon l'invention a une couleur typique et appréciée ou bien notée de produit cuit obtenu en direct, c'est-à-dire sans étape de précuisson ou congélation.

L'expérience a montré que le procédé connu de pâte précuite surgelée conduit souvent à un écaillage de la croûte. Aucun écaillage gênant de la croûte n'est à craindre en employant le procédé suivant l'invention.

Il a également été observé que, contrairement au procédé connu de la pâte précuite surgelée, dont l'exemple comparatif C est une illustration, le procédé suivant l'invention n'est pas limité à des produits cuits de petite taille, mais permet également de réaliser des produits cuits de qualité d'une taille plus importante, par exemple de 1 à 2 kg.

A la fin de la cuisson finale, le produit cuit selon l'invention donne un arôme de produit fraîchement cuit.

Comme illustré dans les exemples, la présente invention permet de fournir au consommateur à tout moment de la journée et en quelques minutes seulement de cuisson finale, un produit de qualité fraîchement sorti du four !

## Revendications

1. Procédé de fabrication d'un pâton précuit surgelé apte à donner un produit cuit de panification par une cuisson finale correspondant à un passage au four à une température au four entre 200°C et 260°C dudit pâton précuit surgelé pendant une durée inférieure ou égale à 5 minutes, de préférence égale ou inférieure à 3 minutes, encore de préférence de 2 à 3 minutes, ledit procédé comprenant les étapes suivantes :
- obtention d'un pâton formé, fermenté et prêt à cuire correspondant au dit produit cuit ;
- précuisson au four dudit pâton jusqu'à ce que :
- sa mie soit coagulée et
- une croûte soit formée et colorée ;
- surgélation du pâton précuit ainsi obtenu, **caractérisé en ce que** la précuisson est effectuée à une température au four de 230°C à 250°C,
le pâton étant préparé avec des ingrédients comprenant, en plus de farine de céréales, de levure et d'eau,
- un ou des sucre intervenant dans les réactions de type Maillard, en une quantité excédant celle qui est fermentée par la levure avant la précuisson et suffisante pour donner de la couleur à la croûte lors de la précuisson, et/ou une ou des protéines intervenant dans les mécanismes de type Maillard, et/ou une préparation enzymatique capable d'apporter un ou des sucres intervenant dans les réactions de type Maillard en une quantité excédant celle qui est fermentée par la levure avant la précuisson et suffisante pour donner de la couleur à la croûte lors de la précuisson, et
- un stabilisant alimentaire, ledit stabilisant alimentaire étant choisi parmi les dérivés de cellulose, pectines, alginates, carraghénanes, gélatine, les amidons chimiquement ou physiquement modifiés, les gommes et les farines prégélatinisées.

2. Procédé selon la revendication 1, **caractérisé en ce que** l'ingrédient contenant un ou des sucres et/ou une ou des protéines intervenant dans les réactions de type Maillard est choisi dans la famille du lactosérum, du lactose, du glucose, du galactose, du saccharose, du fructose.

3. Procédé selon la revendication 1 ou 2, **caractérisée en ce que** ladite préparation enzymatique comprend au moins une enzyme choisie dans la famille des amylases, amyloglucosidases, et hémicellulases libérant des sucres à 5 atomes de carbone et des exoamylases.

4. Procédé selon l'une des revendications 1 à 3, **caractérisé en ce que** les ingrédients du pâton comprennent un stabilisant alimentaire choisi parmi le carboxyméthylcellulose, la gomme de xanthane, la farine prégélatinisée de blé et la farine prégélatinisée de maïs.

5. Procédé selon l'une des revendications 1 à 3, **caractérisé en ce que** les ingrédients du pâton comprennent un stabilisant alimentaire choisi parmi l'amidon prégélatinisé ou une source d'amidon prégélatinisé comme une farine de céréales prégélatinisée.

6. Procédé selon l'une des revendications 1 à 3, **caractérisé en ce que** le pâton est préparé avec de la farine de céréales, de levure, d'eau et des ingrédients comprenant à la fois :
- du lactosérum et/ou du glucose, comme ingrédient contenant un/ou des sucres ou une ou des protéines intervenant dans les réactions de type Maillard ;
- un stabilisant alimentaire choisi parmi les dérivés de cellulose, pectines, alginates, carraghénanes, gélatine, les amidons chimiquement ou physiquement modifiés, les gommes et les farines prégélatinisées.

7. Procédé selon l'une des revendications 1 à 6, **caractérisé en ce que** le pâton est préparé avec des ingrédients comprenant à la fois :
- une source d'enzymes apportant lors de la fermentation de la pâte des sucres intervenants dans les réactions de type Maillard, de préférence de l'amyloglucosidase, et encore de préférence de l'amyloglucosidase en combinaison avec une hémicellulase apportant des sucres en C5, et plus encore de préférence une amyloglucosidase, une hémicellulase apportant des sucres en C5 et une exoamylase ;
- un stabilisant alimentaire, de préférence une farine de céréales panifiables prégélatinisée, de préférence encore une farine de blé prégélatinisée.

8. Procédé selon l'une des revendications 1 à 7 **caractérisé en ce que** le pâton est préparé avec des ingrédients comprenant des céréales maltées, de préférence du blé malté ou de l'orge malté et encore de préférence avec du blé malté.

9. Procédé selon l'une quelconque des revendications 1 à 8, **caractérisé en ce que** le pâton comprend au moins l'un des trois adjuvants de panification suivants :
- un oxydant, de préférence de l'acide ascorbique ;
- un émulsifiant, de préférence l'émulsifiant E472e ou E472f ;
- une préparation enzymatique choisies dans le groupe des alpha-amylases non maltogènes, des endo-alpha-amylases, des hémicellulases de préférence de type endoxylanases, des lipases, des phospholipases, ou une combinaison de ces préparations enzymatiques ;
et de préférence au moins deux desdits trois adjuvants de panification, et encore de préférence, les trois adjuvants de panification.

10. Procédé selon l'une des revendications 1 à 9, **caractérisé par le fait que** le pâton avant précuisson a une hydratation d'au moins 62%.

11. Procédé selon l'une des revendications 1 à 10, **caractérisé en ce que** le pâton est préparé avec des ingrédients comprenant une combinaison :
- d'un stabilisant choisi dans le groupe des dérivés de la cellulose, des amidons prégélatinisés et des farines de céréales prégélatinisées ;
- du lactosérum ; et
- du dextrose.

12. Procédé selon l'une des revendications 1 à 11 **caractérisé en ce que** le pâton est préparé avec des ingrédients comprenant une combinaison :
- d'une farine de céréales panifiable prégélatinisée, de préférence une farine de blé prégélatinisée,
- d'une amyloglucosidase, de préférence en combinaison avec une hémicellulase donnant des sucres en C5 et/ou une exoamylase donnant du maltose.

13. Procédé selon la revendication 12, **caractérisé en ce que** le pâton est préparé avec des ingrédients comprenant, en pourcentage du boulanger, une combinaison de :
- 1% à 3% de dextrose,
- 0,5% à 4% de lactosérum, et
- 0,3% à 1% de carboxyméthylcellulose et/ou 1 à 4% de farine de céréales panifiables prégélatinisée.

14. Procédé selon la revendication 13, **caractérisé en ce que** le pâton est préparé avec, en plus de la ou des préparations enzymatiques, des ingrédients comprenant en pourcentage du boulanger, une combinaison de :
- 1% à 4% de farine de céréales panifiables prégélatinisée, de préférence de la farine de blé prégélatinisée, et
- seulement des additifs autorisés dans le pain courant français selon la directive européenne 95/2 CE, et en particulier 0,009% à 0,020% d'acide ascorbique, de préférence 0,009% à 0,015% d'acide ascorbique.

15. Procédé selon la revendication 14 **caractérisé en ce que** le pâton est préparé avec des ingrédients comprenant, en pourcentage du boulanger 0,1% à 1% de céréales maltées, de préférence du blé malté ou de l'orge malté et encore de préférence du blé malté.

16. Pâton précuit surgelé susceptible d'être obtenu par le procédé selon l'une des revendications 1 à 15.

17. Procédé d'obtention d'un produit cuit de panification comprenant la cuisson finale d'un pâton précuit surgelé selon la revendication 16 par un passage au four dudit pâton précuit surgelé pendant une durée inférieure ou égale à 5 minutes entre 200°C et 260°C, de préférence égale ou inférieure à 3 minutes entre 200°C et 260°C.

18. Procédé selon la revendication 17, **caractérisé en ce que** la cuisson finale est effectuée à une température de 220°C à 260°C, de préférence de 230°C à 250°C.

19. Procédé selon l'une des revendications 1 à 15, 17 ou 18, **caractérisé en ce que** le produit cuit est choisi dans le groupe des pains, y compris les pains à croûtes, les pains viennois, les pains au lait, ayant de préférence un poids de 30 g à 2 kg.

## Claims

1. Process for preparing a frozen, pre-baked dough piece able to yield a baked bread product by final baking, corresponding to the placing of said frozen, pre-baked dough piece in an oven at an oven temperature of between 200°C and 260°C for a time of 5 minutes or less, preferably 3 minutes or less, further preferably for 2 to 3 minutes, said process comprising the following steps:
- obtaining a moulded, fermented dough piece ready to bake, corresponding to said baked product;
- pre-baking said dough piece in an oven until:
• its crumb has coagulated and
• a coloured crust has formed;
- freezing the pre-baked, dough piece obtained, caracterized in that pre-baking is conducted at an oven temperature of 230°C to 250°C;
the dough piece being prepared with ingredients which, in addition to cereal flour, yeast and water, contain:
- a sugar or sugars taking part in Maillard-type reactions in a quantity exceeding the quantity fermented by the yeast before pre-baking and sufficient to impart colour to the crust during pre-baking, and/or proteins taking part in Maillard-type mechanisms, and/or a enzymatic preparation containing a sugar or sugars taking part in Maillard-type reactions in a quantity exceeding the quantity fermented by the yeast before pre-baking and sufficient to impart colour to the crust during pre-baking, and
- a food stabilizer chosen from the group of cellulose derivatives, pectins, alginates, carrageenans, gelatin, chemically or physically modified starch, gums and pre-gelatinized flours.

2. Process according to claim 1, **characterized in that** the ingredient containing sugar(s) and/or proteins taking part in Maillard-type reactions is chosen from the family of whey powder, lactose, glucose, galactose, sucrose, fructose.

3. Process according to any of claims 1 to 2, wherein the enzymatic preparation contains at least one enzyme chosen from the family of amylases, amyloglucosidases, and hemicellulases releasing sugars with 5 carbons atoms and exoamylases.

4. Process according to any of claims 1 to 3, **characterized in that** the ingredients of the dough piece contain a food stabilizer chosen from among carboxymethylcellulose, xanthan gum, pre-gelatinized wheat flour and pre-gelatinized maize flour.

5. Process according to any of claims 1 to 3, **characterized in that** the ingredients of the dough piece contain a food stabilizer chose from pre-gelatinized starch, or a source of pre-gelatinized starch such as a pre-gelatinized cereal flour.

6. Process according to any of claims 1 to 3, **characterized in that** the dough piece is prepared with cereal flour, yeast and water and ingredients containing all the following:
- whey powder and/or glucose as an ingredient containing a sugar or sugars or proteins taking part in Maillard-type reactions;
- a food stabilizer chosen from among carboxymethylcellulose, xanthan gum, pre-gelatinized wheat flour and pre-gelatinized maize flour.

7. Process according to any of claims 1 to 6, **characterized in that** the dough piece is prepared with ingredients containing all the following:
- a source of enzymes which, during fermentation of the dough, contributes sugars taking part in Maillard-type reactions, preferably amyloglucosidase, further preferably amyloglucosidase in combination with a hemicellulase contributing C5 sugars, and still further preferably an amyloglucosidase, a hemicellulase providing C5 sugars and an exoamylase;
- a food stabilizer, preferably a pre-gelatinized bread-making cereal flour, further preferably a pre-gelatinized wheat flour.

8. Process according to any of claims 1 to 7, **characterized in that** the dough piece is prepared with ingredients containing malted cereals, preferably malted wheat or malted barley, further preferably with malted wheat.

9. Process according to any of claims 1 to 8, **characterized in that** the dough piece contains at least one the three following bread-making adjuvants:
- an oxidising agent, preferably ascorbic acid;
- an emulsifier, preferably the E472e or E472f emulsifier,
- an enzymatic preparation chosen from the group of non-maltogenic alpha-amylases, endo-alpha-amylases, hemicellulases preferably of endoxylanase type, lipases, phospholipases, or a combination of these enzymatic preparations;
and preferably at least two of said three bread-making adjuvants, and further preferably these three bread-making adjuvants.

10. Process according to any of claims 1 to 9, **characterized by** the fact that the dough piece before pre-baking has a hydration of at least 62%.

11. Process according to any of claims 1 to 10, **characterized in that** the dough piece is prepared with ingredients containing a combination:
- of a stabilizer chosen from the group of cellulose derivatives, pre-gelatinized starches and pre-gelatinized cereal flours;
- whey powder; and
- dextrose.

12. Process according to any of claims 1 to 11, **characterized in that** the dough piece is prepared with ingredients containing a combination of:
- a pre-gelatinized bread-making cereal flour, preferably a pre-gelatinized wheat flour,
- an amyloglucosidase, preferably in combination with a hemicellulase giving C5 sugars and/or an exoamylase giving maltose.

13. Process according to claim 12, **characterized in that** the dough piece is prepared with ingredients containing, in baker's percentage, a combination of:
- 1% to 3% dextrose;
- 0.5% to 4% whey powder, and
- 0.3% to 1% carboxymethylcellulose and/or 1% to 4% pre-gelatinized bread-making cereal flour.

14. Process according to claim 13, **characterized in that** the dough piece, in addition to the enzymatic preparation(s), is prepared with ingredients containing in baker's percentage a combination of:
- 1% to 4% pre-gelatinized bread-making cereal flour, preferably pre-gelatinized wheat flour, and
- only additives allowed in ordinary French bread ("pain courant français") according to European directive 95/2 CE, and in particular 0.009% to 0.020% ascorbic acid, preferably 0.009% to 0.015% ascorbic acid.

15. Process according to claim 14, **characterized in that** the dough piece is prepared with ingredients which, in baker's percentage, contain 0.1% to 1% malted cereals, preferably malted wheat or malted barley, further preferably malted wheat.

16. Frozen, pre-baked dough piece such as defined in any of claims 1 to 15.

17. Process for obtaining a baked bread product comprising the final baking of a frozen, pre-baked dough piece according to claim 16 by placing said frozen, pre-baked dough piece in an oven for a time of 5 minutes or less at between 200°C and 260°C, preferably for 3 minutes or less at between 200°C and 260°C.

18. Process according to claim 17, **characterized in that** the final baking is conducted at a temperature of 220°C to 260°C, preferably 230°C to 250°C.

19. Process according to any of claims 1 to 15, 17 or 18 **characterized in that** the baked product is chosen from the group comprising breads, including breads with crusts, "pains viennois" (sweetened breads), milk rolls preferably weighing between 30g and 2 kg.

## Patentansprüche

1. Verfahren zur Herstellung eines tiefgefrorenen vorgebackenen Teiglings, der geeignet ist, ein gebackenes Brotprodukt durch ein abschließendes Backen zu ergeben, wobei das abschließende Backen einem Aufenthalt im Ofen bei einer Temperatur im Ofen zwischen 200°C und 260°C des tiefgefrorenen vorgebackenen Teiglings während einer Dauer, die kleiner oder gleich 5 Minuten ist, vorzugsweise gleich oder kleiner 3 Minuten, besonders bevorzugt von 2 bis 3 Minuten, entspricht, wobei das Verfahren die folgenden Schritte umfasst:
- Gewinnung eines geformten Teiglings, der fermentiert und bereit zum Backen ist und dem gebackenen Produkt entspricht;
- Vorbacken im Ofen des Teiglings bis:
- seine Brotkrume koaguliert ist und
- eine Kruste geformt ist und Farbe bekommen hat;
- Einfrieren des so erhaltenen vorgebackenen Teiglings,
**dadurch gekennzeichnet, dass** das Vorbacken bei einer Temperatur im Ofen von 230°C bis 250°C erfolgt,
wobei der Teigling mit Zutaten zubereitet wird, die außer Getreidemehl, Hefe und Wasser umfassen
- einen oder mehrere Zucker, die an den Reaktionen vom Typ Maillard beteiligt sind, in einer Menge, die jene durch die Hefe fermentierte Zuckermenge überschreitet und ausreichend ist, um während des Vorbackens der Kruste Farbe zu verleihen, und/oder ein oder mehrere Protein(e), das/die an den Mechanismen vom Typ Maillard beteiligt ist/sind, und/oder eine enzymatische Zubereitung, die geeignet ist, einen oder mehrere Zucker zu liefern, die an den Reaktionen vom Typ Maillard beteiligt sind, in einer Menge, die jene durch die Hefe fermentierte Zuckermenge überschreitet und ausreichend ist, um der Kruste während des Vorbackens Farbe zu verleihen, und
- ein Nahrungsstabilisator, wobei der Nahrungsstabilisator aus Zellulosederivaten, Pektinen, Alginaten, Carrageenen, Gelatine, chemisch oder physisch modifizierten Stärken, vorgelatinierten Gummis und Mehlen ausgewählt wird.

2. Verfahren nach Anspruch 1, **dadurch gekennzeichnet, dass** die Zutat, die einen oder mehrere Zucker und/oder ein oder mehrere Protein(e), der/das/die an den Reaktionen vom Typ Maillard beteiligt ist/sind, enthält, aus der Gruppe umfassend Molke, Laktose, Glucose, Galactose, Saccharose, Fructose ausgewählt wird.

3. Verfahren nach Anspruch 1 oder 2, **dadurch gekennzeichnet, dass** die enzymatische Zubereitung mindestens ein Enzym umfasst, das aus der Gruppe umfassend Amylasen, Amyloglukosidasen, und Hemicellulasen, die Zucker mit fünf Kohlenstoffatomen freigeben, und Exoamylasen ausgewählt wird.

4. Verfahren nach einem der Ansprüche 1 bis 3, **dadurch gekennzeichnet, dass** die Zutaten des Teiglings einen Nahrungsstabilisator umfassen, der aus Carboxymethylcellulose, Xanthan, vorgelatiniertem Weizenmehl und vorgelatiniertem Maismehl ausgewählt wird.

5. Verfahren nach einem der Ansprüche 1 bis 3, **dadurch gekennzeichnet, dass** die Zutaten des Teiglings einen Nahrungsstabilisator umfassen, der aus der vorgelatinierter Stärke oder einer Quelle für vorgelatinierte Stärke, wie ein vorgelatiniertes Getreidemehl, ausgewählt wird.

6. Verfahren nach einem der Ansprüche 1 bis 3, **dadurch gekennzeichnet, dass** der Teigling mit Getreidemehl, Hefe, Wasser und Zutaten hergestellt wird, die zugleich umfassen:
- Molke und/oder Glucose als Zutat, die einen oder mehrere Zucker oder ein oder mehrere Protein(e) enthält, der/das/die an den Reaktionen vom Typ Maillard beteiligt ist/sind;
- einem Nahrungsstabilisator, der aus Zellulosederivaten, Pektinen, Alginaten, Carrageenen, Gelatine, chemisch oder physisch modifizierten Stärken, vorgelatinierten Gummis und Mehlen ausgewählt wird.

7. Verfahren nach einem der Ansprüche 1 bis 6, **dadurch gekennzeichnet, dass** der Teigling aus Zutaten hergestellt wird, die zugleich umfassen:
- eine Quelle für Enzyme, die während der Fermentierung des Teigs Zucker liefern, die an den Reaktionen vom Typ Maillard beteiligt sind, vorzugsweise Amyloglucosidase, und besonders bevorzugt Amyloglucosidase in Kombination mit einer Hemicellulase, die Zucker mit fünf Kohlenstoffatomen liefert, und ganz besonders bevorzugt eine Amyloglucosidase, eine Hemicellulase, die Zucker mit fünf Kohlenstoffatomen liefert, und eine Exoamylase;
- ein Nahrungsstabilisator, vorzugsweise ein vorgelatiniertes Brotgetreidemehl, besonders bevorzugt ein vorgelatiniertes Weizenmehl.

8. Verfahren nach einem der Ansprüche 1 bis 7, **dadurch gekennzeichnet, dass** der Teigling aus Zutaten hergestellt wird, die mit Malz versetzte Getreide umfassen, vorzugsweise mit Malz versetzter Weizen oder mit Malz versetzte Gerste und besonders bevorzugt mit Malz versetzter Weizen.

9. Verfahren nach einem der Ansprüche 1 bis 8, **dadurch gekennzeichnet, dass** der Teigling mindestens einen der drei folgenden Brotzusatzstoffe aufweist:
- ein Oxidationsmittel, vorzugsweise Ascorbinsäure;
- einen Emulgator, vorzugsweise den Emulgator E472e oder E472f;
- eine enzymatische Zubereitung, die aus der Gruppe der nicht maltogenen alpha-Amylasen, der Endo-alpha-Amylasen, der Hemicellulasen, vorzugsweise vom Typ Endoxylanasen, der Lipasen, der Phospholipasen, oder einer Kombination dieser enzymatischen Zubereitungen ausgewählt wird;
und vorzugsweise mindestens zwei der drei Brotzusatzstoffe, und besonders bevorzugt die drei Brotzusatzstoffe.

10. Verfahren nach einem der Ansprüche 1 bis 9, **dadurch gekennzeichnet, dass** der Teigling vor dem Vorbacken eine Hydratation von mindestens 62 % aufweist.

11. Verfahren nach einem der Ansprüche 1 bis 10, **dadurch gekennzeichnet, dass** der Teigling aus Zutaten hergestellt wird, die eine Kombination aufweisen von:
- einem Stabilisator, der aus der Gruppe der Zellulosederivate, der Stärken, der vorgelatinierten Stärken und der vorgelatinierten Getreidemehle ausgewählt wird;
- Molke; und
- Dextrose.

12. Verfahren nach einem der Ansprüche 1 bis 11, **dadurch gekennzeichnet, dass** der Teigling aus den Zutaten hergestellt wird, die eine Kombination umfassen von:
- einem vorgelatinierten Brotgetreidemehl, vorzugsweise einem vorgelatinierten Weizenmehl,
- einer Amyloglucosidase, vorzugsweise in Kombination mit einer Hemicellulase, die Zucker mit fünf Kohlenstoffatomen liefert, und/oder einer Exoamylase, die Maltose liefert.

13. Verfahren nach Anspruch 12, **dadurch gekennzeichnet, dass** der Teigling aus Zutaten hergestellt wird, die in Bäckerprozent eine Kombination umfassen von:
- 1 % bis 3 % Dextrose,
- 0,5 % bis 4 % Molke, und
- 0,3 % bis 1 % Carboxymethylcellulose und/oder 1 % bis 4 % vorgelatiniertem Brotgetreidemehl.

14. Verfahren nach Anspruch 13, **dadurch gekennzeichnet, dass** der Teigling zusätzlich zu der oder den enzymatischen Zubereitungen aus Zutaten hergestellt wird, die in Bäckerprozent eine Kombination umfassem von:
- 1 % bis 4 % von vorgelatiniertem Brotgetreidemehl, vorzugsweise von vorgelatiniertem Weizenmehl, und
- Zusatzstoffen, die lediglich für das gewöhnliche französische Brot entsprechend der europäischen Richtlinie 95/2 CE zugelassen sind, und insbesondere 0,009 % bis 0,020 % Ascorbinsäure, vorzugsweise 0,009 % bis 0,015 % Ascorbinsäure.

15. Verfahren nach Anspruch 14, **dadurch gekennzeichnet, dass** der Teigling aus Zutaten hergestellt wird, die in Bäckerprozent 0,1 % bis 1 % mit Malz versetztes Getreide, vorzugsweise mit Malz versetzten Weizen oder mit Malz versetzte Gerste und besonders bevorzugt mit Malz versetzten Weizen umfassen.

16. Tiefgefrorener vorgebackener Teigling, der vorgesehen ist, nach dem Verfahren gemäß einem der Ansprüche 1 bis 15 hergestellt zu werden.

17. Verfahren zum Erhalt eines gebackenen Brotproduktes, das das Endbacken eines tiefgefrorenen vorgebackenen Teiglings nach Anspruch 16 durch einen Aufenthalt im Ofen des tiefgefrorenen vorgebackenen Teiglings während einer Dauer, die kleiner oder gleich 5 Minuten ist, bei 200°C bis 260°C, vorzugsweise gleich oder kleiner als 3 Minuten bei 200°C bis 260°C, umfasst.

18. Verfahren nach Anspruch 17, **dadurch gekennzeichnet, dass** das Endbacken bei einer Temperatur von 220°C bis 260°C, vorzugsweise 230°C bis 250°C erfolgt.

19. Verfahren nach einem der Ansprüche 1 bis 15, 17 oder 18, **dadurch gekennzeichnet, dass** das gebackene Produkt aus der Gruppe der Brote, darin enthalten Brote mit Kruste, der Viennoiserien, der Milchbrote ausgewählt wird, die vorzugsweise ein Gewicht von 30 g bis 2 kg haben.
